# EUROPEAN PATENT APPLICATION

(11) **EP 4 563 368 A1**
(43) Date of publication of application: **04.06.2025**
(21) Application number: 24215547.1
(22) Date of filing: 26.11.2024
(51) Int. Cl.: B44C 1/17

(54) **COMPOSITE FILM, DECORATIVE FILM, AND METHOD OF DECORATING TARGET SUBSTRATE**

(30) Priority: 29.11.2023 TW 112146322
(71) Applicant: Univacco Technology Inc., Tainan City 721013 (TW)
(72) Inventor: KUO, Ming Chieh, 721013 Tainan City (TW); LIN, Yin Yung, 721013 Tainan City (TW); LIU, Chao Wei, 721013 Tainan City (TW); HSU, Yu Chang, 721013 Tainan City (TW); KUO, Chien Liang, 721013 Tainan City (TW)
(74) Representative: HGF

(57) **Abstract**

A composite film (100), a decorative film and a method of decorating a target substrate are provided. The composite film includes a substrate (110) and a transfer layer (120) disposed on a surface of the substrate. The transfer layer has a loss factor (tan δ) in a range between 0.015 and 0.1. The composite film is configured to prepare a laminated thin film, a cold pressed film and a hot pressed film. By controlling property of the transfer layer, material cost of the processes for decorating the target substrate and procedure of waste treatment can be decreased.

## Description

### BACKGROUND

### Field of Invention

The present invention relates to a composite film. More particularly, the present invention relates to a composite film, a decorative film and a method of decorating a target substrate.

### Description of Related Art

A decorative film process involves transferring a decorative layer on a decorative film onto a surface of a product, in which a color layer with glossy pattern can be formed on the surface of the product, thereby achieving decorative effect. Conventional decorative film includes a substrate, a release layer on the substrate and a color layer on the release layer. In a conventional decorative film process, the release layer is peeled off from the substrate of the decorative film, such that the color layer on the release layer can be transferred onto a product desired to be transferred. Thus, the decorative film operation is performed on the surface of the product, and the color layer is formed on the product.

However, the release layer of the conventional decorative film is only used to transferring. Thus, after the decorative film operation is completed, the release layer becomes a waste material and needs to be treated by combustion or other suitable method.

Therefore, a composite film, a decorative film and a method of decorating a target substrate are needed to develop a new function of the transfer layer.

### SUMMARY

An aspect of the present invention provides a composite film, which includes a transfer layer having a specific loss factor.

Another aspect of the present invention provides a decorative film, which includes a decorative composite layer, and the decorative composite layer includes a transfer layer having a specific loss factor.

Yet another aspect of the present invention provides a method of decorating a target substrate, which includes transferring the decorative composite layer of the above aspect onto the target substrate.

According to the aspect of the present invention, the composite film is provided. The composite film includes a substrate and a transfer layer disposed on a surface of the substrate. The transfer layer has a loss factor (tan δ) in a range between 0.015 and 0.1. The composite film is configured to prepare a laminated thin film, a cold pressed thin film and a hot pressed thin film.

According to an embodiment of the present invention, the substrate has a thickness in a range between 2.0 µm and 15.0 µm.

According to an embodiment of the present invention, the substrate includes polyethylene terephthalate (PET), polyethylene furanoate (PEF), poly (methyl methacrylate) (PMMA), polycarbonate (PC), polylactic acid (PLA), polyethylene (PE), polyvinyl chloride (PVC), polystyrene (PS), acrylonitrile butadiene styrene (ABS), polyurethane (PU), polyacrylonitrile (PAN), glass or any combinations thereof; and the transfer layer includes acrylic material, polyurethane material or any combinations thereof.

According to an embodiment of the present invention, the loss factor of the transfer layer is measured under a temperature of 20°C to 65°C, and the transfer layer has a storage modulus in a range between 5×10⁶ Pa and 5×10⁷ Pa and a loss modulus in a range between 5×10⁴ Pa and 5×10⁵ Pa.

According to an embodiment of the present invention, the transfer layer has a heat-resistance temperature in a range between 110°C and 180°C.

According to an embodiment of the present invention, the transfer layer has a dyne level not smaller than 35 dyn, and a difference between the dyne level of the transfer layer and the dyne level of the substrate is not greater than 5 dyn.

According to the another aspect of the present invention, the decorative film is provided. The decorative film includes a substrate and a decorative composite layer disposed on the substrate. The decorative composite layer includes a decorative layer and a transfer layer disposed between the decorative layer and the substrate, in which the transfer layer has a loss factor in a range between 0.015 and 0.1.

According to an embodiment of the present invention, the substrate has a thickness in a range between 2.0 µm and 15.0 µm.

According to an embodiment of the present invention, the loss factor of the transfer layer is measured under a temperature of 20°C to 65°C, and the transfer layer has a storage modulus in a range between 5×10⁶ Pa and 5×10⁷ Pa and a loss modulus in a range between 5×10⁴ Pa and 5×10⁵ Pa.

According to an embodiment of the present invention, the transfer layer comprises acrylic material, polyurethane material or any combinations thereof.

According to an embodiment of the present invention, when the transfer layer includes the acrylic material, the decorative composite layer has a peeling strength not greater than 5 gf/in.

According to an embodiment of the present invention, when the transfer layer includes polyurethane material, the decorative composite layer has a peeling strength not greater than 30 gf/in.

According to an embodiment of the present invention, the decorative composite layer has a heat-resistance temperature in a range between 110°C to 180°C.

According to an embodiment of the present invention, a release layer is excluded between the decorative composite layer and the substrate.

According to an embodiment of the present invention, the decorative film further includes an adhesive layer, in which the decorative composite layer is disposed between the adhesive layer and the substrate.

According to an embodiment of the present invention, when the transfer layer includes the acrylic material, the transfer layer has a peeling strength between 2.5 gf/in and 4.0 gf/in.

According to an embodiment of the present invention, when the transfer layer includes the polyurethane material, the transfer layer has a peeling strength between 4.5 gf/in and 10 gf/in.

According to the yet another aspect of the present invention, the method of decorating a target substrate is provided. The method includes disposing an adhesive layer on a decorative composite layer of the decorative film of the above aspect, in which the decorative composite layer is disposed between the adhesive layer and a substrate of the decorative film. The method includes applying the decorative film onto the target substrate after disposing the adhesive layer, in which the decorative composite layer is located between the substrate and the target substrate. The method includes performing a decorating process to transfer the decorative composite layer onto the target substrate.

According to the yet another aspect of the present invention, the method of decorating a target substrate is provided. The method includes applying the decorative film of the above aspect onto the target substrate, in which a decorative composite layer is located between a substrate of the decorative film and the target substrate. The method includes performing a decorating process to transfer the decorative composite layer onto the target substrate.

According to an embodiment of the present invention, the peeling strength is in a range between 2 gf/in and 10 gf/in.

Application of the composite film, the decorative film and the method of decorating the target substrate of the present invention can make the transfer layer be peeled off from the substrate and transferred onto the target substrate by controlling the loss factor of the transfer layer. As such, the transfer layer of the composite film has both functions of a release layer and a color layer, and material cost of the processes for decorating the target substrate and procedure of waste treatment can be decreased.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 illustrates a cross-section diagram of a composite film according to some embodiments of the present invention.
Fig. 2 illustrates a cross-section diagram of a decorative film according to some embodiments of the present invention.
Figs. 3A-3B are transfer printing results of performing heat printing processes with different thickness of substrates of some embodiments of the present invention.
Figs. 4A-4B are transfer printing results of performing cold transfer printing processes with different thickness of substrates of some embodiments of the present invention.
Figs. 5A-5C illustrate cross-section diagrams of various stages of performing a decorating process to a target substrate by a decorative film according to some embodiments of the present invention.

### DETAILED DESCRIPTION

As above, the present invention provides a composite film, a decorative film and a method of decorating a target substrate. The transfer layer can be peeled off from the substrate and be transferred onto the target substrate by controlling the loss factor of the transfer layer. Therefore, the transfer layer has both functions of a release layer and a color layer, so a release layer can be excluded in the present invention, and material cost of the processes for decorating the target substrate and procedure of waste treatment can be decreased.

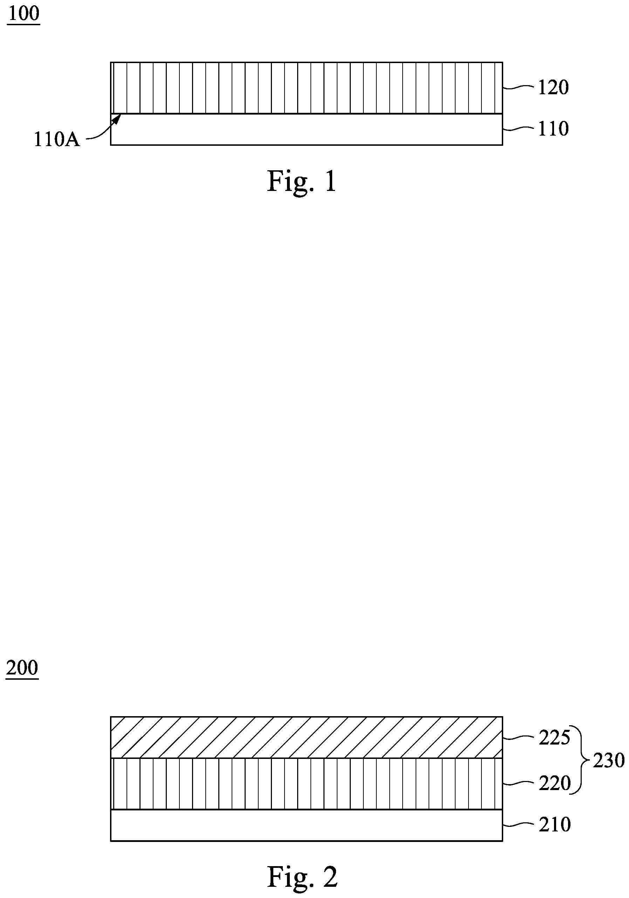

Referring to Fig. 1, Fig.1 illustrates a cross-section diagram of a composite film 100 according to some embodiments of the present invention. The composite film 100 includes a substrate 110 and a transfer layer 120, in which the transfer layer 120 is disposed on a surface 110A of the substrate 110. The composite film 100 is configured to prepare a laminated thin film, a cold pressed thin film and a hot pressed thin film. Thus, the composite film 100 can be used in a decorative film process, such as a heat printing process or a cold transfer printing process.

In some embodiments, the substrate 110 includes polyethylene terephthalate (PET), polyethylene furanoate (PEF), poly (methyl methacrylate) (PMMA), polycarbonate (PC), polylactic acid (PLA), polyethylene (PE), polyvinyl chloride (PVC), polystyrene (PS), acrylonitrile butadiene styrene (ABS), polyurethane (PU), polyacrylonitrile (PAN), glass or any combinations thereof.

In some embodiments, the substrate 110 has a thickness in a range between about 2.0 µm and about 15.0 µm, and about 2.0 µm and about 10.0 µm is preferable. The substrate with the aforementioned thickness range can increase softness of the substrate; thus, when performing the heat printing, a heat printing temperature can be decreased due to great thermal conductivity, and better transfer printing effect can be obtained; similarly, when performing the cold transfer printing process, pressure conduction is more direct, so greater transfer printing effect can also be obtained. It is noted that the aforementioned transfer printing effect includes thin lines, fine texts and color saturation.

Since when the transfer layer 120 is teared off, energy would be lost due to elongation and deformation of the transfer layer 120, and a greater loss modulus means greater energy loss, while peeling strength increases accordingly. In some embodiments, the transfer layer 120 has the loss modulus in a range between about 5×10⁴ Pa and about 5×10⁵ Pa. A storage modulus corresponds to instant deformation ability under pressure and tensile strength of a glue layer (such as the transfer layer 120) detaching from a surface of something attached (such as the substrate 110). Thus, the storage modulus should be increased if there is a need to decrease the peeling strength. In some embodiments, the transfer layer has the storage modulus in a range between about 5×10⁶ Pa and about 5×10⁷ Pa.

It is understood that a loss factor (or loss tangent) is a ratio of the loss modulus (G") to the storage modulus (G'). Therefore, as described above, the transfer layer 120 preferably has the lower loss factor, thereby being teared off from the substrate easily. In some embodiments, the loss factor of the transfer layer is about 0.015 to about 0.1 under a temperature of about 20°C to about 65°C.

In some embodiments, the transfer layer 120 includes acrylic material, polyurethane material or any combinations thereof. The acrylic material can be polyurethane modified acrylic material, and the polyurethane material can be acrylic modified polyurethane. Moreover, the transfer layer 120 can include recycled material, such as recycled polyurethane material or recycles acrylic material.

Due to the above properties of the transfer layer 120, the transfer layer 120 can be removed from the substrate 110 without applying too great peeling strength. In some embodiments when the transfer layer 120 includes the acrylic material, the transfer layer 120 has the peeling strength not greater than 5 gf/in, about 2.5 gf/in to about 4.0 gf/in is preferable, and about 3.0 gf/in to about 3.5 gf/in is more preferable. In some embodiments when the transfer layer 120 includes the polyurethane material, the transfer layer 120 has the peeling strength not greater than 30 gf/in, about 10 gf/in to about 30 gf/in is preferable, and about 10 gf/in to about 15 gf/in is more preferable.

Since the composite film 100 can be employed in the heat printing process, it is better to have a suitable heat-resistance temperature. In some embodiments, the transfer layer 120 has the heat-resistance temperature in a range between about 110°C and about 180°C. The heat-resistance temperature of the transfer layer 120 can be various according to the kinds of materials. For example, when the transfer layer 120 includes the acrylic material, the heat-resistance temperature is about 110°C to about 150°C preferably; when the transfer layer 120 includes the polyurethane material, the heat-resistance temperature is about 170°C preferably.

In some embodiments, the substrate 110 has a dyne level not smaller than 38 dyn, and about 38 dyn to about 40 dyn is preferable. In some embodiments, the transfer layer 120 has the dyne level not smaller than 35 dyn, about 35 dyn to about 45 dyn is preferable, and about 40 dyn to about 45 dyn is more preferable. When the transfer layer 120 has the dyne level in the aforementioned range, the transfer layer 120 has better adhesive property. It is preferable to have homogeneous dyne level for various layers of the composite film 100. In some embodiments, a difference between the dyne level of the transfer layer 120 and the dyne level of the substrate 110 is not greater than 5 dyne, and about 2 dyne to about 5 dyne is preferable. As such, the transfer layer 120 can have better adhesive property with the substrate 110, but it can still be teared off from the surface of the substrate 110 while applying specific peeling strength.

The transfer layer can be a color layer of the conventional decorative film, and the transfer layer 120 can has both functions of the release layer and the color layer of the conventional decorative film. Therefore, when the composite film 100 of the present invention is used as the decorative film, the release layer can be excluded, thereby decreasing the material cost of the decorating process of the target substrate and the process cost of treating waste.

Referring to Fig. 2, Fig. 2 illustrates a cross-section diagram of a decorative film 200 according to some embodiments of the present invention. The decorative film 200 includes a substrate 210 and a decorative composite layer 230 disposed on the substrate 210. The decorative composite layer 230 includes a transfer layer 220 and a decorative layer 225, in which the transfer layer 220 is disposed between the substrate 210 and the decorative layer 225. In some embodiments, the decorative layer 225 includes an electroplated metal layer or other functional layers.

In some embodiments, the substrate 210 includes polyethylene terephthalate (PET), polyethylene furanoate (PEF), poly (methyl methacrylate) (PMMA), polycarbonate (PC), polylactic acid (PLA), polyethylene (PE), polyvinyl chloride (PVC), polystyrene (PS), acrylonitrile butadiene styrene (ABS), polyurethane (PU), polyacrylonitrile (PAN), glass or any combinations thereof. In some embodiments, the transfer layer 220 includes acrylic material, polyurethane material or any combinations thereof.

In some embodiments, the substrate 210 has a thickness in a range between about 2.0 µm and about 15.0 µm. In some embodiments, the decorative composite layer 230 has the heat-resistance temperature in a range between about 110°C and about 180°C, thereby avoiding being damaged during the heat printing process due to high temperature.

In some embodiments, the transfer layer 220 has the loss modulus in a range between about 5×10⁴ Pa and about 5×10⁵ Pa. In some embodiments, the transfer layer 220 has the storage modulus in a range between about 5×10⁶ Pa and about 5×10⁷ Pa. In some embodiments, the transfer layer 220 has the loss factor of in a range between about 0.015 and about 0.1 under the temperature of about 20°C to about 65°C.

In some embodiments, the transfer layer 220 has the dyne level not smaller than 35 dyn, about 35 dyn to about 45 dyn is preferable, and about 40 dyn to about 45 dyn is more preferable. When the transfer layer 220 has the dyne level in the aforementioned range, the transfer layer 220 has better adhesive property.

In some embodiments, a difference between the dyne level of the transfer layer 220 and the dyne level of the substrate 210 is not greater than 5 dyne, and about 2 dyne to about 5 dyne is preferable. As such, the decorative composite layer 230 can be teared off from the surface of the substrate 210. In some embodiments, the decorative composite layer 230 has the peeling strength not greater than 30 gf/in. There is a little different peeling strength among the transfer layers 220 of the decorative composite layers 230 including different materials. In some embodiments when the transfer layer 220 includes the acrylic material, the decorative composite layer 230 has the peeling strength in a range from about 2.5 gf/in to about 4.0 gf/in preferably, and more preferably from about 3.0 gf/in to about 3.5 gf/in. In some embodiments when the transfer layer 220 includes the polyurethane material, the decorative composite layer 230 has the peeling strength in a range from about 10 gf/in to about 30 gf/in preferably, and more preferably from about 10 gf/in to about 15 gf/in.

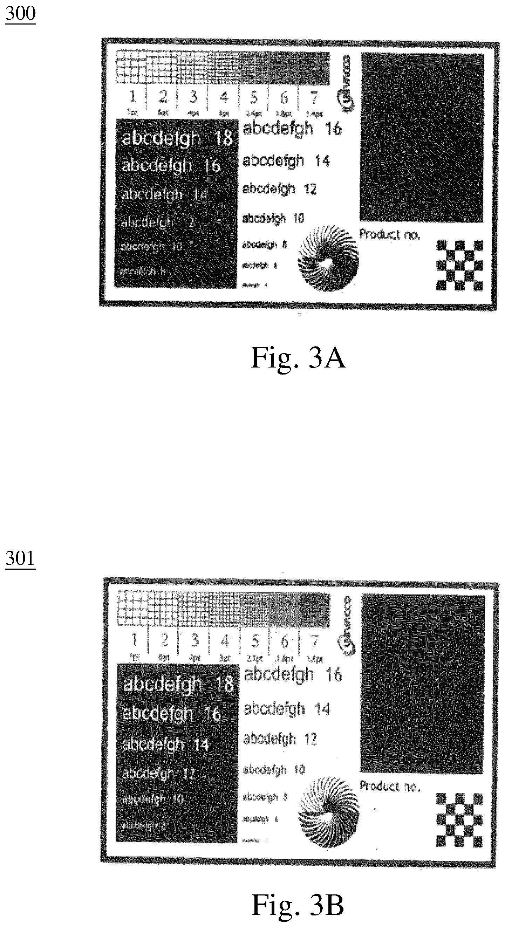

The peeling strength of the decorative composite layer 230 is related to the thickness of the substrate 210. In some embodiments, the substrate 210 has a thickness in a range between about 2.0 µm and about 15.0 µm, and about 2.0 µm and about 10.0 µm is preferable. For example, when the heat printing process is performed, if the thickness of the substrate 210 is about 12.0 µm, the peeling strength of the decorative composite layer 230 (in which the transfer layer 220 includes the polyurethane material) is in a range from about 4.5 gf to about 10 gf, and from about 5.5 gf to about 8.5 gf is preferable. A transfer printing result 300 was shown in Fig. 3A, which performed the transfer printing for 0.9 seconds at a transfer printing temperature of 110°C. If the thickness of the substrate 210 is about 10.0 µm, the peeling strength of the decorative composite layer 230 (in which the transfer layer 220 includes the polyurethane material) is in a range from about 4.0 gf to about 8.0 gf, and from about 5.0 gf to about 7.5 gf is preferable. A transfer printing result 301 was shown in Fig. 3B, which performed the transfer printing for 0.9 seconds at a transfer printing temperature of 90°C. Compared to Fig. 3A, Fig. 3B was obtained from the heat printing process by using the substrate 210 with smaller thickness, so the heat printing process can be performed at the lower transfer printing temperature. Figs. 3A and 3B showed that the transfer printing effect (including thin lines, fine texts and color saturation) of Fig. 3B is better.

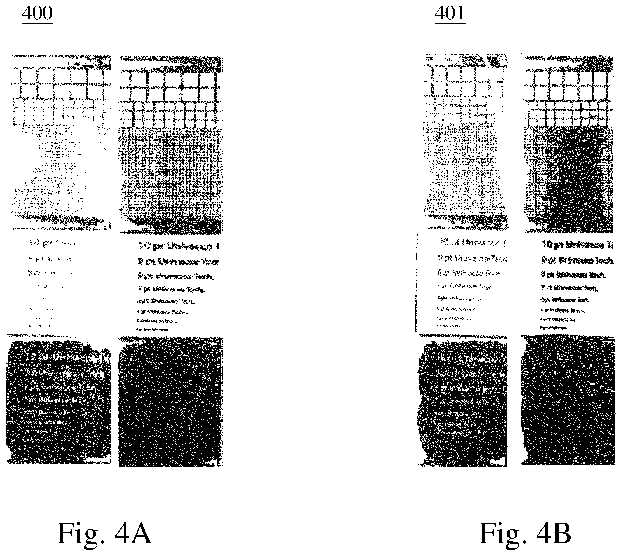

When the cold transfer printing process is performed, if the thickness of the substrate 210 is about 12.0 µm, the peeling strength of the decorative composite layer 230 (in which the transfer layer 220 includes the acrylic material) is in a range from about 2.5 gf to about 4.0 gf, and from about 3.0 gf to about 3.5 gf is preferable. A transfer printing result 400 was shown in Fig. 4A. If the thickness of the substrate 210 is about 6.0 µm, the peeling strength of the decorative composite layer 230 (in which the transfer layer 220 includes the acrylic material) is in a range from about 1.0 gf to about 2.5 gf, and from about 1.0 gf to about 2.0 gf is preferable. A transfer printing result 401 was shown in Fig. 4B. Compared to Fig. 4A showed the transfer printing result 400 with poor color saturation, Fig. 4B was obtained from the cold transfer printing process by using the substrate 210 with smaller thickness, which showed the transfer printing effect having both great color saturation and cutting quality.

As a result of above characteristics of the transfer layer 220, in some embodiments, a release layer is excluded between the decorative composite layer 230 of the decorative film 200 and the substrate 210. In some embodiments, the decorative film 200 further includes an adhesive layer (not shown in Fig. 2) disposed on the decorative composite layer 230; that is, the decorative composite layer 230 is disposed between the adhesive layer and the substrate 210.

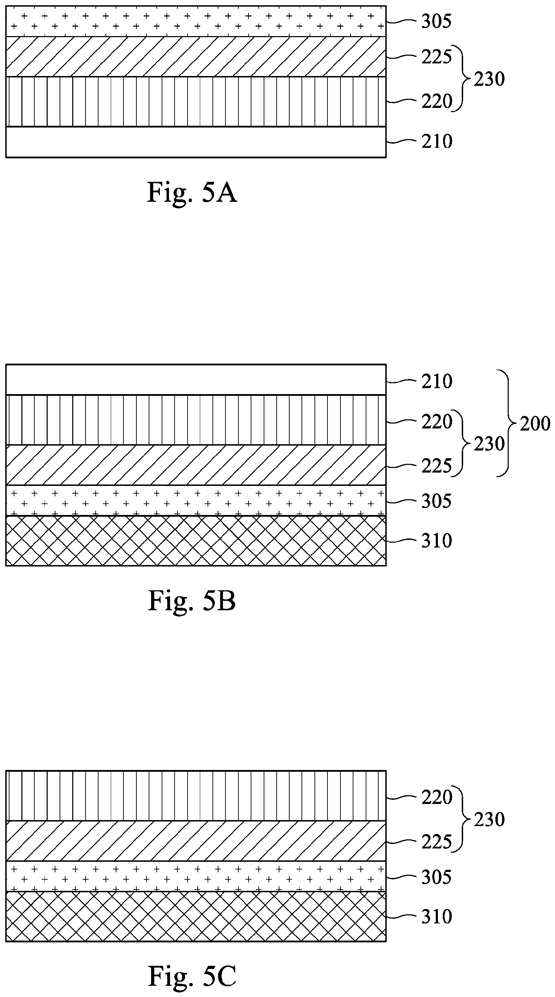

The decorative film 200 of the present invention can be used as the decorative film, thereby tearing off the decorative composite layer 230 from top of the substrate 210, and transferring to the target substrate. Figs. 5A to 5C illustrate cross-section diagrams of various stages of performing a decorating process to a target substrate by a decorative film according to some embodiments of the present invention. The following describes the method of decorating the target substrate by using Figs. 5A-5C.

First, referring to Fig. 5A, the adhesive layer 305 is disposed on the decorative film 200. Specifically, the adhesive layer 305 is disposed on the decorative composite layer 230; thus, the decorative composite layer 230 is located between the adhesive layer 305 and the substrate 210. It is understood that if the decorative film 200 includes the adhesive layer, such step can be skipped during the decorative process.

Subsequently, referring to Fig. 5B, the decorative film 200 is reversed upside down and is adhered on the target substrate 310 by the adhesive layer 305. Hence, the decorative composite layer 230 is located between the substrate 210 and the target substrate 310.

Then, referring to Fig. 5C, the decorating process is performed to transfer the decorative composite layer 230 onto the target substrate 310. In other words, the decorative composite layer 230 is teared off from the substrate in the decorating process. In some embodiments, the decorating process applied the peeling strength to the substrate 210, and the peeling strength is not greater than 10 gf/in, and about 2 gf/in to about 10 gf/in is preferable. In some embodiments when the transfer layer 220 includes the acrylic material, the decorating process applied the peeling strength to the substrate 210, and the peeling strength is in a range from about 2.5 gf/in to about 4.0 gf/in, and about 3 gf/in to about 3.5 gf/in is preferable. In some embodiments when the transfer layer 220 includes the polyurethane material, the decorating process applied the peeling strength to the substrate 210, and the peeling strength is in a range from about 4.5 gf/in to about 10 gf/in, and about 5.5 gf/in to about 8.5 gf/in is preferable.

The present invention provides a composite film, a decorative film and a method of decorating a target substrate. The transfer layer can be peeled off from the substrate and be transferred onto the target substrate by controlling the loss factor of the transfer layer. The material cost of the processes for decorating the target substrate and procedure of waste treatment can be decreased by controlling properties of the transfer layer.

## Claims

1. A composite film (100), comprising:
a substrate (110); and
a transfer layer (120), disposed on a surface (110A) of the substrate (110), wherein the transfer layer (120) has a loss factor (tan δ) in a range between 0.015 and 0.1,
wherein the composite film (100) is configured to prepare a laminated thin film, a cold pressed thin film and a hot pressed thin film.

2. The composite film of claim 1, wherein the substrate (110) has a thickness in a range between 2.0 µm and 15.0 µm.

3. The composite film of any of claims 1 or 2, wherein the substrate (110) comprises polyethylene terephthalate (PET), polyethylene furanoate (PEF), poly (methyl methacrylate) (PMMA), polycarbonate (PC), polylactic acid (PLA), polyethylene (PE), polyvinyl chloride (PVC), polystyrene (PS), acrylonitrile butadiene styrene (ABS), polyurethane (PU), polyacrylonitrile (PAN), glass or any combinations thereof; and
the transfer layer (120) comprises acrylic material, polyurethane material or any combinations thereof.

4. The composite film of any of claims 1 to 3, wherein the loss factor of the transfer layer (120) is measured under a temperature of 20°C to 65°C, and
the transfer layer (120) has a storage modulus in a range between 5×10⁶ Pa and 5×10⁷ Pa and a loss modulus in a range between 5×10⁴ Pa and 5×10⁵ Pa.

5. The composite film of any of claims 1 to 4, wherein the transfer layer (120) has a heat-resistance temperature in a range between 110°C and 180°C.

6. The composite film of any of claims 1 to 5, wherein the transfer layer (120) has a dyne level not smaller than 35 dyn, and a difference between a dyne level of the transfer layer (120) and a dyne level of the substrate (110) is not greater than 5 dyn.

7. A decorative film (200), comprising:
a substrate (210); and
a decorative composite layer (230), disposed on the substrate (210), wherein the decorative composite layer comprises:
a decorative layer (225); and
a transfer layer (220), disposed between the decorative layer and the substrate (210), wherein the transfer layer has a loss factor in a range between 0.015 and 0.1.

8. The decorative film of claim 7, wherein the substrate (210) has a thickness in a range between 2.0 µm and 15.0 µm.

9. The decorative film of any of claims 7 or 8, wherein the loss factor of the transfer layer (220) is measured under a temperature of 20°C to 65°C, and
the transfer layer (220) has a storage modulus in a range between 5×10⁶ Pa and 5×10⁷ Pa and a loss modulus in a range between 5×10⁴ Pa and 5×10⁵ Pa.

10. The decorative film of any of claims 7 to 9, wherein the transfer layer (220) comprises acrylic material, polyurethane material or any combinations thereof.

11. The decorative film of claim 10, wherein when the transfer layer (220) comprises the acrylic material, the decorative composite layer has a peeling strength not greater than 5 gf/in.

12. The decorative film of claim 10, wherein when the transfer layer (220) comprises polyurethane material, the decorative composite layer has a peeling strength not greater than 30 gf/in.

13. The decorative film of any of claims 7 to 12, wherein the decorative composite layer (230) has a heat-resistance temperature in a range between 110°C to 180°C.

14. The decorative film of any of claims 7 to 13, wherein a release layer is excluded between the decorative composite layer (230) and the substrate (210).

15. The decorative film of any of claims 7 to 14, further comprising:
an adhesive layer (305), wherein the decorative composite layer (230) is disposed between the adhesive layer (305) and the substrate (210).

16. The decorative film of claim 15, wherein when the transfer layer (220) comprises acrylic material, the transfer layer has a peeling strength between 2.5 gf/in and 4.0 gf/in.

17. The decorative film of claim 15, wherein when the transfer layer (220) comprises polyurethane material, the transfer layer has a peeling strength between 4.5 gf/in and 10 gf/in.

18. A method of decorating a target substrate (310), comprising:
disposing an adhesive layer (305) on a decorative composite layer (230) of the decorative film (200) of any of claims 7 to 14, wherein the decorative composite layer (230) is disposed between the adhesive layer (305) and a substrate (210) of the decorative film (200);
applying the decorative film (200) onto the target substrate (310) after disposing the adhesive layer (305), wherein the decorative composite layer (230) is located between the substrate (210) and the target substrate (310); and
performing a decorating process to transfer the decorative composite layer (230) onto the target substrate (310).

19. A method of decorating a target substrate (310), comprising:
applying the decorative film (200) of any of claims 15 to 17 onto the target substrate (310), wherein a decorative composite layer (230) of the decorative film (200) is located between a substrate (210) of the decorative film (200) and the target substrate (310); and
performing a decorating process to transfer the decorative composite layer (230) onto the target substrate (310).

20. The method of decorating the target substrate of any of claims 18 or 19, wherein the decorating process applies a peeling strength to the substrate (210), and the peeling strength is in a range between 2 gf/in and 10 gf/in.
